# EUROPÄISCHE PATENTSCHRIFT

(11) **EP 1 923 819 B1**
(45) Veröffentlichungstag und Bekanntmachung des Hinweises auf die Patenterteilung: **23.12.2009**
(21) Anmeldenummer: 07020085.2
(22) Anmeldetag: 13.10.2007
(51) Int. Cl.: G06K 7/10

(54) **Barcodelesegerät**
Bar code reader
Appareil de lecture d'un code à barres

(30) Priorität: 18.11.2006 DE 102006054489
(43) Veröffentlichungstag der Anmeldung: 21.05.2008
(73) Patentinhaber: Leuze electronic GmbH + Co. KG, 73277 Owen/Teck (DE)
(72) Erfinder: Claus, Armin, 72622 Nürtingen (DE); Droemer, Jörg, 72574 Bad Urach-Wittlingen (DE); Dümmel, Thomas, 72584 Hülben (DE)
(74) Vertreter: Ruckh, Rainer Gerhard

(56) Entgegenhaltungen:
- EP-A- 0 606 887
- EP-A- 1 115 022

## Beschreibung

Die Erfindung betrifft ein Barcodelesegerät.

Derartige Barcodelesegeräte dienen zur Erfassung von Barcodes oder generell von Kontrastmustern aufweisenden Marken. Zur Detektion dieser Barcodes weisen Barcodelesegeräte der in Rede stehenden Art einen Sendelichtstrahlen emittierenden Sender, einen Empfangslichtstrahlen empfangenden Empfänger sowie eine Ablenkeinheit, mittels derer die Sendelichtstrahlen periodisch innerhalb eines Abtastbereichs geführt werden, auf. Weiterhin weist das Barcodelesegerät eine Auswerteeinheit auf, in welcher die Empfangssignale des Empfängers zur Dekodierung des jeweiligen Barcodes ausgewertet werden.

Die Ablenkeinheit des Barcodelesegeräts besteht typischerweise aus einem Polygonspiegelrad, welches an seinen Seitenwänden eine vorgegebene Anzahl von identischen Spiegelflächen aufweist. Das Polygonspiegelrad wird mittels eines Motors angetrieben und führt dadurch eine Drehbewegung um eine Drehachse aus. Durch diese Drehbewegung werden die an den Spiegelflächen reflektierten Sendelichtstrahlen innerhalb einer Abtastebene geführt, die den Abtastbereich bildet.

Bei der Montage des Barcodelesegeräts muss das Polygonspiegelrad auf dem Motor, der typischerweise von einem Außenläufermotor gebildet ist, montiert werden.

Im einfachsten Fall wird das Polygonspiegelrad auf den Motor aufgesetzt und an diesem angeschraubt. Nachteilig hierbei ist, dass durch das Verschrauben am Motor am Polygonspiegelrad Punktspannungen auftreten. Durch diese Punktspannungen werden die optischen Eigenschaften des Barcodelesegeräts in erheblicher Weise negativ beeinflusst. Dies beruht darauf, dass sich diese Punktspannungen bis hin zu den Spiegelflächen des Polygonspiegelrads selbst für den Fall übertragen, dass das Polygonspiegelrad aus Metall, insbesondere Aluminium besteht. Dadurch bedingt entstehen signifikante Verzerrungen der Abtastlinien, die durch die über diese Spiegelflächen geführten Sendelichtstrahlen generiert werden.

Weiterhin ist eine gängige Praxis bei der Montage von Barcodelesegeräten ein Fixieren des Polygonspiegelrads auf dem Motor durch Klebestellen. Zur Ausbildung derartiger Klebestellen wird typischerweise doppelseitiges Klebeband eingesetzt. Aufgrund von Materialunregelmäßigkeiten des Klebebands oder daran anhaftender Verschmutzungen ergibt sich häufig eine unebene Auflagefläche des Polygonspiegelrads auf dem Motor. Dadurch bedingt wird ein unrunder Lauf des Polygonspiegelrads erhalten, der wiederum zu einer unerwünschten Verzerrung der Abtastlinien führt.

Ein Barcodelesegerät mit den Merkmalen des Oberbegriffs des Anspruchs 1 ist aus der EP 1 115 022 A2 bekannt. Bei diesem Barcodelesegerät wird eine von einem Motor getriebene Welle als Einlegeteil bei der Herstellung eines Polygonspiegelrads als Kunststoff-Spritzgussteil verwendet. Alternativ kann die Welle in ein Polygonspiegelrad eingepresst werden.

In der EP 0 606 887 A1 ist ein Scanner für einen Laserdrucker beschrieben. Der Scanner umfasst ein Polygonspiegelrad, auf dessen Oberseite eine Spannplatte zur Fixierung an einer motorisch getriebenen Welle vorgesehen ist. An den Oberseiten der Spannplatte und/oder des Polygonspiegelrads sind Ausnehmungen vorgesehen, in welche Ausgleichsgewichte eingebracht werden, vorhandene Unwuchten des Scanners zu beseitigen.

Der Erfindung liegt die Aufgabe zugrunde, ein Barcodelesegerät der eingangs genannten Art bereitzustellen, bei welchem bei geringem konstruktiven Aufwand eine reproduzierbare Strahlführung der Sendelichtstrahlen über die Ablenkeinheit erzielt wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Barcodelesegerät umfasst einen Sendelichtstrahlen emittierenden Sender, einen Empfangslichtstrahlen empfangenden Empfänger und eine Ablenkeinheit zur periodischen Ablenkung der Sendelichtstrahlen innerhalb eines Abtastbereichs. Die Ablenkeinheit weist ein Polygonspiegelrad auf, welches auf einem Motor mit einer um eine Drehachse drehbaren Welle gelagert ist. Die Welle ist durch eine zentrale Bohrung in der Decke des Polygonspiegelrads geführt. Zur Fixierung des Polygonspiegelrads sind am Motor mechanische Befestigungsmittel vorgesehen, welche an der Welle fixierbar sind und Druckkräfte auf die Oberseite der Decke ausüben, so dass diese mit parallel zur Drehachse der Welle verlaufenden Anpresskräften gegen die Oberseite des Motors gepresst ist. Das Befestigungsmittel ist von einer an der Welle fixierten Spannfeder gebildet, die mit ihren unteren Rändern auf der Oberseite der Decke des Polygonspiegelrads aufliegt. Die Auflageflächen, auf welchen die unteren Ränder der Spannfeder aufliegen, sind konzentrisch zur Drehachse. An der ebenen Unterseite der Decke des Polygonspiegelrads mündet ein konzentrisch zur Drehachse ausgebildeter Auflagering aus, mit welchem das Polygonspiegelrad auf der Oberseite des Motors aufliegt, wobei der Auflagering unterhalb der Auflageflächen liegt.

Ein wesentlicher Vorteil des erfindungsgemäßen Barcodelesegeräts besteht darin, dass das Polygonspiegelrad einfach und schnell am Motor dadurch befestigt werden kann, indem das Befestigungsmittel an dem durch die Bohrung des Polygonspiegelrads geführten freien Ende der Welle fixiert wird.

Hierbei ist weiterhin vorteilhaft, dass das so fixierte Befestigungsmittel Druckkräfte auf die Decke des Polygonspiegelrads ausübt, durch welche parallel zur Drehachse der Welle verlaufende Anpresskräfte generiert werden, mit welchen die Decke des Polygonspiegelrads gegen die Oberseite des Motors gedrückt wird.

Durch diese Kraftverteilung ist eine spannungsfreie Lagerung des Polygonspiegelrads auf dem Motor gewährleistet. Weiterhin müssen zwischen dem Motor und dem Polygonspiegelrad keine Zwischenschichten wie Klebestreifen angebracht werden, so dass das Polygonspiegelrad passgenau auf dem Motor aufliegt, wodurch Taumelbewegungen bei der Drehung des Polygonspiegelrads vermieden werden.

Somit werden Verzerrungen der Abtastlinien, die durch die Führung der Sendelichtstrahlen über die einzelnen Spiegelflächen des Polygonspiegelrads erhalten werden, systematisch vermieden.

Erfindungsgemäß ist das Befestigungsmittel von einer Spannfeder gebildet. Diese kann als metallisches Biegeteil ausgebildet sein und ist dementsprechend kostengünstig herstellbar.

Die Fixierung der Spannfeder kann auf einfache Weise dadurch erfolgen, dass diese in einer Vertiefung an der Welle einrastbar ist. Ebenso kann die Spannfeder auch einfach abgenommen werden um so das Polygonspiegelrad vom Motor abzulösen.

Die so an der Welle fixierte Spannfeder ist vorteilhaft drehsymmetrisch zur Drehachse der Welle ausgebildet, wobei die Auflageflächen, auf welchen die unteren Ränder der Spannfeder auf dem Polygonspiegelrad aufliegen, konzentrisch zur Drehachse der Welle sind.

Dadurch wird eine bezüglich der Drehachse symmetrische Kraftverteilung der Anpresskräfte erhalten, so dass durch diese Anpresskräfte keine Kippmomente bei der Anpressung des Polygonspiegelrads am Motor entstehen.

Um einen ruhigen, taumelfreien Lauf des Polygonspiegelrads zu gewährleisten, ist eine exakt rotationssymmetrische Anordnung des Polygonspiegelrads bezüglich der Drehachse erforderlich. Dementsprechend muss das Polygonspiegelrad exakt auf der vorzugsweise ebenen Oberfläche des Motors aufsitzen. Prinzipiell kann hierzu die Decke des Polygonspiegelrads an ihrer Unterseite eine entsprechende ebene Fläche aufweisen, so dass die Decke flächig auf der Oberseite des Motors aufliegt.

Diese Anordnung ist jedoch äußerst empfindlich gegen toleranzbedingte Formschwankungen der einzelnen Bauteile.

Erfindungsgemäß ist daher an der Unterseite der Decke des Polygonspiegelrads ein konzentrisch zur Drehachse ausgebildeter Auflagering vorgesehen, mit welchem das Polygonspiegelrad auf der Oberseite des Motors aufliegt. Dadurch wird eine besonders exakte und reproduzierbare Auflage des Polygonspiegelrads auf dem Motor geschaffen. Besonders vorteilhaft wird der Radius des Auflagerings möglichst groß gewählt, so dass dieser im Randbereich des Motors aufliegt. Dies bewirkt mit hoher Sicherheit eine taumelfreie Lagerung des Polygonspiegelrads auf dem Motor.

Erfindungsgemäß ist die Spannfeder an die Dimensionierung des Auflagerings so angepasst, dass die Auflageflächen der Spannfeder auf der Oberseite der Decke des Polygonspiegelrads direkt oberhalb des Auflagerings liegen. Damit wird erreicht, dass die von der Spannfeder ausgeübten Anpresskräfte direkt über den Auflagering auf die Oberseite des Motors eingeleitet werden. Durch diese symmetrische Kraftverteilung werden Spannungen im Polygonspiegelrad und dadurch bewirkte Deformationen des Polygonspiegelrads, die die optischen Eigenschaften der Strahlablenkung der Sendelichtstrahlen beeinträchtigen könnten, mit hoher Sicherheit vermieden.

Die Erfindung wird im Nachstehenden anhand der Zeichnungen erläutert. Es zeigen:
- Figur 1:: Schematische Darstellung eines Barcodelesegeräts.
- Figur 2:: Längsschnitt durch ein motorisch getriebenes Polygonspiegelrad für das Barcodelesegerät gemäß Figur 1.

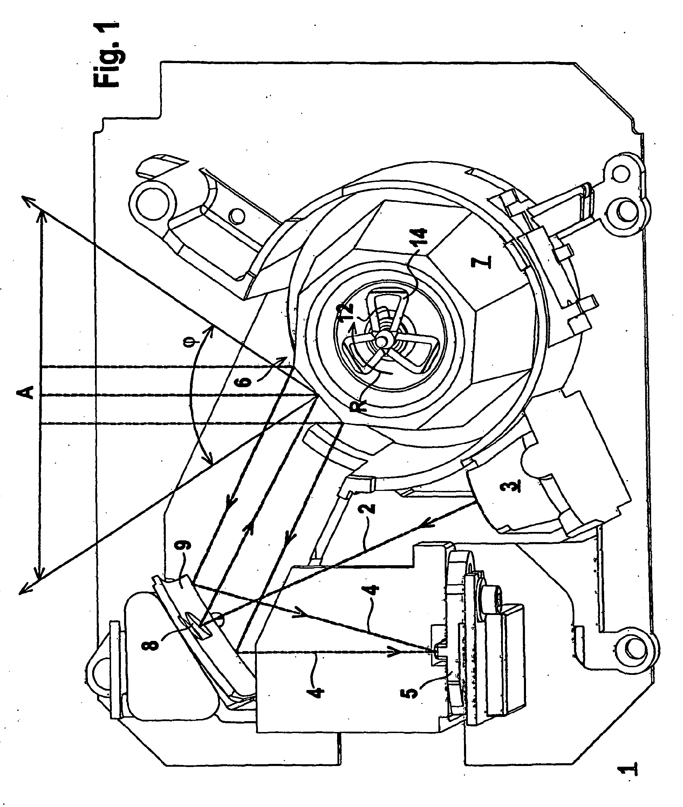

Figur 1 zeigt ein Ausführungsbeispiel eines Barcodelesegeräts 1 zur Erfassung von Barcodes oder generell Kontrastmustern aufweisenden Marken.

Das Barcodelesegerät 1 gemäß Figur 1 weist einen Sendelichtstrahlen 2 emittierenden Sender 3 und einen Empfangslichtstrahlen 4 empfangenden Empfänger 5 auf. Der Sender 3 ist von einer Laserdiode gebildet, der Empfänger 5 besteht aus einer Fotodiode oder dergleichen.

Der Sender 3 und der Empfänger 5 sind an eine nicht dargestellte Auswerteeinheit angeschlossen. Die Auswerteeinheit dient zur Ansteuerung des Senders 3. Weiterhin erfolgt in der Auswerteeinheit zur Erfassung der Kontrastmuster der Barcodes eine Auswertung der am Ausgang des Empfängers 5 anstehenden Empfangssignale.

Das Barcodelesegerät 1 weist weiterhin eine Ablenkeinheit in Form eines motorisch getriebenen, rotierenden Polygonspiegelrads 6 auf. Die Drehrichtung des Polygonspiegelrads 6 ist in Figur 1 mit einem mit R gekennzeichneten Pfeil dargestellt. Das Polygonspiegelrad 6 weist mehrere identische Spiegelflächen 7 auf, wobei im vorliegenden Fall acht derartiger Spiegelflächen 7 vorgesehen sind.

Die Sendelichtstrahlen 2 und die Empfangslichtstrahlen 4 werden jeweils über dieselbe Spiegelfläche 7 des Polygonspiegelrads 6 geführt. Dabei verlaufen die Strahlachsen der auf das Polygonspiegelrad 6 auftreffenden Sendelichtstrahlen 2 und Empfangslichtstrahlen 4 koaxial zueinander. Die koaxiale Strahlführung wird durch Umlenkung der Sendelichtstrahlen 2 beziehungsweise Empfangslichtstrahlen 4 an einem Umlenkspiegel 8 beziehungsweise einem Hohlspiegel 9 erhalten. Der Umlenkspiegel 8 ist auf dem Hohlspiegel 9 in dessen Zentrum befestigt. Die vom Sender 3 emittierten Sendelichtstrahlen 4 werden über den Umlenkspiegel 8 umgelenkt und auf eine Spiegelfläche 7 des Polygonspiegelrads 6 geführt. Von dort gelangen die Sendelichtstrahlen 2 in einen Erfassungsbereich zur Detektion des Barcodes. Aus dem Erfassungsbereich zurückreflektierte Empfangslichtstrahlen 4 gelangen auf dieselben Spiegelflächen 7 und werden von dort in Richtung des Hohlspiegels 9 geführt. Durch die Reflexion der Empfangslichtstrahlen 4 am Hohlspiegel 9 werden diese auf den Empfänger 5 geführt. Da der Hohlspiegel 9 fokussierend wirkt, ist keine weitere Optik zur Fokussierung der Empfangslichtstrahlen 4 notwendig.

Durch die Drehbewegung des Polygonspiegelrads 6 werden die Sendelichtstrahlen 2 periodisch innerhalb eines Winkelbereichs ϕ abgelenkt, wobei die Sendelichtstrahlen 2 innerhalb einer in der Zeichenebene von Figur 1 liegenden Ebene geführt sind. Die Größe des Winkelbereichs ist durch die Anzahl der Spiegelflächen 7 des Polygonspiegelrads 6 bestimmt.

Der Winkelbereich ϕ definiert den Abtastbereich A innerhalb dessen die Sendelichtstrahlen 2 geführt sind, um dort angeordnete Barcodes zu detektieren.

Durch die periodische Abtastung eines Barcodes mit den im Abtastbereich geführten Sendelichtstrahlen 2 wird den am Barcode reflektierten Sendelichtstrahlen 2, welche als Empfangslichtstrahlen 4 zum Empfänger 5 geführt sind, entsprechend dem Kontrastmuster des jeweiligen Barcodes eine Amplitudenmodulation aufgeprägt. Entsprechend weisen auch die Empfangssignale am Ausgang des Empfängers 5 eine entsprechende Amplitudenmodulation auf. Diese wird in der Auswerteeinheit zur Dekodierung des Barcodes ausgewertet.

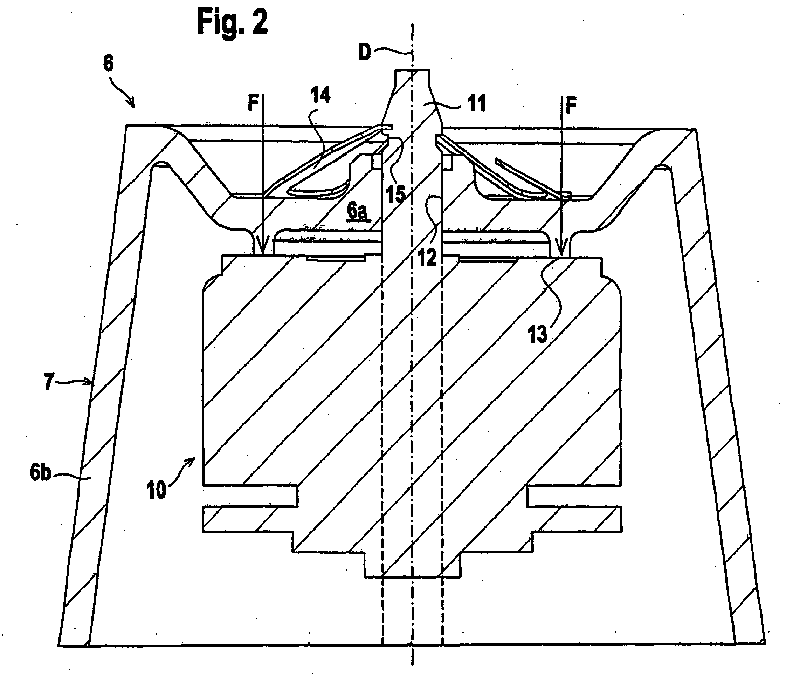

Figur 2 zeigt in einer Längsschnittdarstellung das auf einem Motor 10 aufsitzende Polygonspiegelrad 6. Der Motor 10 ist im vorliegenden Fall als Außenläufermotor ausgebildet. Der Motor 10 umfasst eine Welle 11, die über die ebene Oberseite des Motors 10 hervorsteht und die Drehachse D des Motors 10 definiert.

Das Polygonspiegelrad 6 besteht aus einem Kunststoff-Spritzgussteil. Dabei weist das Polygonspiegelrad 6 eine im Wesentlichen kreisscheibenförmige Decke 6a auf. Am Rand der Decke 6a schließen sich von der Decke 6a nach unten entsprechende Seitenwände 6b an, deren Außenseiten verspiegelt sind und so die Spiegelflächen des Polygonspiegelrads 6 bilden.

Wie aus Figur 2 ersichtlich, begrenzen die Decke 6a und die Seitenwände 6b des Polygonspiegelrads 6 einen nach unten offenen Hohlraum, in welchen der Motor 10 einführbar ist.

Die Decke 6a des Polygonspiegelrads 6 weist eine zentrale kreisförmige Bohrung 12 auf. Zur Montage des Polygonspiegelrads 6 auf dem Motor 10 wird das Polygonspiegelrad 6 auf den Motor 10 aufgesetzt, so dass die Welle 11 durch die Bohrung 12 geführt wird. Der Durchmesser der Bohrung 12 ist an den Durchmesser der Welle 1 angepasst, so dass diese spielfrei oder nahezu spielfrei in der Bohrung 12 liegt.

Weiterhin weist das Polygonspiegelrad 6 einen einstückig mit diesem ausgebildeten Auflagering 13 auf, der über die ansonsten ebene Unterseite der Decke 6a des Polygonspiegelrads 6 hervorsteht. Der Auflagering 13 ist konzentrisch zum Zentrum der Bohrung 12 ausgebildet. Der Auflagering 13 weist einen über seinen Umfang konstanten Querschnitt auf. Die Unterseite des Auflagerings 13 bildet eine ebene Fläche, die in einer parallel zur Ebene der Unterseite der Decke 6a verlaufender Ebene verläuft.

Bei auf dem Motor 10 aufgesetzten Polygonspiegelrad 6 sitzt der Auflagering 13 auf der ebenen Oberseite des Motors 10 auf. Der Durchmesser des Auflagerings 13 ist so gewählt, dass dieser im Randbereich des Motors 10 aufliegt.

Zur Fixierung des Polygonspiegelrads 6 am Motor 10 ist ein mechanisches Befestigungsmittel in Form einer Spannfeder 14 vorgesehen. Die Spannfeder 14 besteht aus einem metallischen Biegeteil. Dieses Biegeteil ist so geformt, dass die Spannfeder 14 drei flügelförmige Segmente bildet, die drehsymmetrisch zu deren Zentrum ausgebildet sind. Die Segmente weisen jeweils eine identische Steigung derart auf, dass die unteren, äußeren Ränder der Spannfeder 14 tiefer liegen, als die inneren oberen Ränder der Spannfeder 14.

Die inneren Ränder der Spannfeder 14 liegen in einer Ebene in Abstand zueinander. Die unteren Ränder der Spannfeder 14 liegen ebenfalls in einer Ebene.

Zur Fixierung des Polygonspiegelrads 6 auf dem Motor 10 wird die Spannfeder 14 auf das obere freie Ende der Welle 11, welches über die Bohrung 12 in der Decke 6a des Polygonspiegelrads 6 hervorsteht, aufgesteckt. Dabei weiten sich die flügelförmigen Segmente der Spannfeder 14 auf. Die oberen Ränder der Spannfeder 14 werden dann in eine Vertiefung der Welle 11 eingeführt und rasten dort ein. Die Vertiefung ist in Form einer Nut 15 ausgebildet, die in einer Ebene senkrecht zur Drehachse der Welle 11 an dieser in Umfangsrichtung umläuft.

Die Höhenlage der Nut 15 an der Welle 11 ist so gewählt und an die Steigung der Segmente der Spannfeder 14 angepasst, dass bei in der Nut 15 eingerasteten oberen Rändern der Spannfeder 14 die unteren Ränder der Spannfeder 14 infolge der Spannkraft der Spannfeder 14 gegen die Oberseite der Decke 6a des Polygonspiegelrads 6 gepresst werden.

Durch die rotationssymmetrische Ausbildung der Spannfeder 14 liegen die Auflageflächen, mit denen die unteren Ränder der Spannfeder 14 auf der Decke 6a des Polygonspiegelrads 6 aufliegen, auf einem konzentrisch zur Drehachse beziehungsweise Zentrum der Bohrung 12 angeordneten Kreisring. Die Größe der Spannfeder 14 ist dabei an die Lage des Auflagerings 13 so angepasst, dass die Auflageflächen direkt oberhalb des Auflagerings 13 liegen.

Somit werden durch die Spannfeder 14 Anpresskräfte F zur Fixierung des Polygonspiegelrads 6 auf dem Motor 10 generiert, die einerseits parallel zur Drehachse D verlaufen und andererseits wie in Figur 2 dargestellt, direkt über den Auflagering 13 auf die Oberseite des Motors 10 übertragen werden.

Durch die unmittelbare Einleitung der durch die Spannfeder 14 generierten Anpresskräfte F über den Auflagering 13 und durch deren zur Drehachse D rotationssymmetrische Verteilung wird eine taumelfreie Lagerung des Polygonspiegelrads 6 auf dem Motor 10 erzielt.

### Bezugszeichenliste

- (1): Barcodelesegerät
- (2): Sendelichtstrahlen
- (3): Sender
- (4): Empfangslichtstrahlen
- (5): Empfänger
- (6): Polygonspiegelrad
- (6a): Decke
- (6b): Seitenwand
- (7): Spiegelfläche
- (8): Umlenkspiegel
- (9): Hohlspiegel
- (10): Motor
- (11): Welle
- (12): Bohrung
- (13): Auflagering
- (14): Spannfeder
- (15): Nut

## Patentansprüche

1. Barcodelesegerät mit einem Sendelichtstrahlen emittierenden Sender, einem Empfangslichtstrahlen empfangenden Empfänger und einer Ablenkeinheit zur periodischen Ablenkung der Sendelichtstrahlen innerhalb eines Abtastbereichs, wobei die Ablenkeinheit ein Polygonspiegelrad aufweist, welches auf einem Motor mit einer um eine Drehachse drehbaren Welle gelagert ist, wobei die Welle durch eine zentrale Bohrung in der Decke des Polygonspiegelrads geführt ist, **dadurch gekennzeichnet, dass** zur Fixierung des Polygonspiegelrads (6) am Motor (10) mechanische Befestigungsmittel vorgesehen sind, welche an der Welle (11) fixierbar sind und Druckkräfte auf die Oberseite der Decke (6a) ausüben, so dass diese mit parallel zur Drehachse der Welle (11) verlaufenden Anpresskräften gegen die Oberseite des Motors (10) gepresst ist, wobei das Befestigungsmittel von einer an der Welle (11) fixierten Spannfeder (14) gebildet ist, die mit ihren unteren Rändern auf der Oberseite der Decke (6a) des Polygonspiegelrads (6) aufliegt, wobei die Auflageflächen, auf welchen die unteren Ränder der Spannfeder (14) aufliegen, konzentrisch zur Drehachse sind, und wobei an der ebenen Unterseite der Decke (6a) des Polygonspiegelrads (6) ein konzentrisch zur Drehachse ausgebildeter Auflagering (13) ausmündet, mit welchem das Polygonspiegelrad (6) auf der Oberseite des Motors (10) aufliegt, wobei der Auflagering (13) unterhalb der Auflageflächen liegt.

2. Barcodelesegerät nach Anspruch 1, **dadurch gekennzeichnet, dass** die Spannfeder (14) von einem metallischen Biegeteil gebildet ist.

3. Barcodelesegerät nach einem der Ansprüche 1 oder 2, **dadurch gekennzeichnet, dass** die Spannfeder (14) in eine Vertiefung der Welle (11) einrastbar ist.

4. Barcodelesegerät nach Anspruch 3, **dadurch gekennzeichnet, dass** die Vertiefung von einer in einer Ebene senkrecht zur Drehachse der Welle (11) umlaufenden Nut (15) gebildet ist.

5. Barcodelesegerät nach einem der Ansprüche 1 bis 4, **dadurch gekennzeichnet, dass** die Anpresskräfte, mit welchen die Decke (6a) des Polygonspiegelrads (6) gegen die Oberseite des Motors (10) gepresst werden, durch die Spannkraft der an der Welle (11) fixierten Spannfeder (14) generiert werden.

6. Barcodelesegerät nach einem der Ansprüche 1 bis 5, **dadurch gekennzeichnet, dass** die Auflageflächen an der Oberseite des Deckels (6a) in einer senkrecht zur Drehachse der Welle (11) verlaufenden Ebene orientiert sind.

7. Barcodelesegerät nach einem der Ansprüche 1 bis 6, **dadurch gekennzeichnet, dass** die Auflageflächen einen Kreisring bilden.

8. Barcodelesegerät nach einem der Ansprüche 1 bis 7, **dadurch gekennzeichnet, dass** der Auflagering (13) im Randbereich des Motors (10) auf dessen ebener Oberseite aufliegt.

9. Barcodelesegerät nach einem der Ansprüche 1 bis 8, **dadurch gekennzeichnet, dass** die Außenseite der an die Decke (6a) des Polygonspiegelrads (6) anschließenden Seitenwände (6b) Spiegelflächen (7) bilden, an welchen die Sendelichtstrahlen (2) reflektiert werden.

10. Barcodelesegerät nach Anspruch 9, **dadurch gekennzeichnet, dass** die Seitenwände (6b) des Polygonspiegelrads (6) einen Hohlraum begrenzen, in welchen der Motor (10) einführbar ist.

11. Barcodelesegerät nach einem der Ansprüche 1 bis 10, **dadurch gekennzeichnet, dass** das Polygonspiegelrad (6) aus einem Kunststoff Spritzgussteil besteht.

12. Barcodelesegerät nach einem der Ansprüche 1 bis 11, **dadurch gekennzeichnet, dass** der Motor (10) als Außenläufermotor ausgebildet ist.

## Claims

1. Bar code reader comprising a transmitter emitting transmitted light beams, a receiver receiving received light beams and a deflecting unit for periodic deflection of the transmitted light beams within a scanning region, wherein the deflecting unit comprises a polygon mirror wheel mounted on a motor with a shaft rotatable about an axis of rotation, wherein the shaft is led through a central bore in the top of the polygon mirror wheel, **characterised in that** provided for fixing the polygon mirror wheel (6) to the motor (10) are mechanical fastening means which are fixable to the shaft (11) and exert pressure forces on the upper side of the top (6a) so that this is pressed against the upper side of the motor (10) by pressing forces running parallel to the axis of rotation of the shaft (11), wherein the fastening means is formed by a tension spring (14) which is fixed to the shaft (11) and rests by its lower edges on the upper side of the top (6a) of the polygon mirror wheel (6), wherein the support surfaces on which the lower edges of the tension spring (14) rest are concentric with the axis of rotation and wherein a support ring (13), which is formed concentrically with the axis of rotation and by which the polygon mirror wheel (6) rests on the upper side of the motor (10), opens out at the planar underside of the top (6a) of the polygon mirror wheel (6), wherein the support ring (13) lies below the support surfaces.

2. Bar code reader according to claim 1, **characterised in that** the tension spring (14) is formed by a metallic bendable part.

3. Bar code reader according to one of claims 1 and 2, **characterised in that** the tension spring (14) is detentable in a recess of the shaft (11).

4. Bar code reading according to claim 3, **characterised in that** the recess is formed by a groove (15) encircling in a plane perpendicular to the axis of rotation of the shaft (11).

5. Bar code reader according to any one of claims 1 to 4, **characterised in that** the pressing forces by which the top (6a) of the polygon mirror wheel (6) is pressed against the upper side of the motor (10) are generated by the tension force of the tension spring (14) fixed to the shaft (11).

6. Bar code reader according to any one of claims 1 to 5, **characterised in that** the support surfaces at the upper side of the top (6a) are oriented in a plane running perpendicularly to the axis of rotation of the shaft (11).

7. Bar code reader according to any one of claims 1 to 6, **characterised in that** the support surfaces form a circular ring.

8. Bar code reader according to any one of claims 1 to 7, **characterised in that** the support ring (13) in the edge region of the motor (10) rests on the planar upper side thereof.

9. Bar code reader according to any one of claims 1 to 8, **characterised in that** the outer side of the side walls (6b) connected with the top (6a) of the polygon mirror wheel (6) form mirror surfaces (7) at which the transmitted light beams (2) are reflected.

10. Bar code reader according to claim 9, **characterised in that** the side walls (6b) of the polygon mirror wheel (6) bound a cavity into which the motor (10) is introducible.

11. Bar code reader according to any one of claims 1 to 10, **characterised in that** the polygon mirror wheel (6) consists of a plastics material injection-moulded part.

12. Bar code reader according to any one of claims 1 to 11, **characterised in that** the motor (10) is formed as an external rotor motor.

## Revendications

1. Appareil de lecture de codes à barres comprenant un émetteur émettant des rayons lumineux d'émission, un récepteur recevant des rayons lumineux de réception et une unité de déviation pour dévier périodiquement les rayons lumineux d'émission à l'intérieur d'une plage de balayage, l'unité de déviation présentant une roue à miroir polygonal, laquelle est montée sur un moteur avec un arbre tournant autour d'un axe de rotation, l'arbre passant à travers un trou central dans le plafond de la roue à miroir polygonal, **caractérisé en ce que** pour la fixation de la roue à miroir polygonal (6) au moteur (10) il est prévu des moyens de fixation mécaniques qui peuvent être fixés à l'arbre (11) et qui exercent des forces de pression sur la face supérieure du plafond (6a), de sorte que celle-ci est pressée contre la face supérieure du moteur (10) par des forces d'application s'étendant parallèlement à l'axe de rotation de l'arbre (11), le moyen de fixation étant formé par un ressort tendeur (14) fixé à l'arbre (11), qui s'appuie par ses bords inférieurs sur la face supérieure du plafond (6a) de la roue à miroir polygonal (6), les surfaces d'appui sur lesquelles s'appuient les bords inférieurs du ressort tendeur (14) étant concentriques à l'axe de rotation, et une bague d'appui (13) concentrique à l'axe de rotation aboutissant sur la face inférieure plane du plafond (6a) de la roue à miroir polygonal (6), par laquelle bague d'appui (13) la roue à miroir polygonal (6) s'appuie sur la face supérieure du moteur (10), la bague d'appui (13) étant située au-dessous des surfaces d'appui.

2. Appareil de lecture de codes à barres selon la revendication 1, **caractérisé en ce que** le ressort tendeur (14) est formé par une pièce pliée métallique.

3. Appareil de lecture de codes à barres selon une des revendications 1 ou 2, **caractérisé en ce que** le ressort tendeur (14) peut être encliqueté dans un creux de l'arbre (11).

4. Appareil de lecture de codes à barres selon la revendication 3, **caractérisé en ce que** le creux est formé par une rainure (15) s'étendant tout autour de l'arbre (11) dans un plan perpendiculaire à son axe de rotation.

5. Appareil de lecture de codes à barres selon une des revendications 1 à 4, **caractérisé en ce que** les forces d'application avec lesquelles le plafond (6a) de la roue à miroir polygonal (6) est pressé contre la face supérieure du moteur (10) sont générées par la force de tension du ressort tendeur (14) fixé à l'arbre (11).

6. Appareil de lecture de codes à barres selon une des revendications 1 à 5, **caractérisé en ce que** les surfaces d'appui sur la face supérieure du plafond (6a) sont orientées dans un plan s'étendant perpendiculairement à l'axe de rotation de l'arbre (11).

7. Appareil de lecture de codes à barres selon une des revendications 1 à 6, **caractérisé en ce que** les surfaces d'appui forment une couronne circulaire.

8. Appareil de lecture de codes à barres selon une des revendications 1 à 7, **caractérisé en ce que** la bague d'appui (13) s'appuie dans la zone de bord du moteur (10) sur la face supérieure plane de celui-ci.

9. Appareil de lecture de codes à barres selon une des revendications 1 à 8, **caractérisé en ce que** la face extérieure des parois latérales (6b) se raccordant au plafond (6a) de la roue à miroir polygonal (6) forment des surfaces réfléchissantes (7) sur lesquelles les rayons lumineux d'émission (2) sont réfléchis.

10. Appareil de lecture de codes à barres selon la revendication 9, **caractérisé en ce que** les parois latérales (6b) de la roue à miroir polygonal (6) délimitent une cavité dans laquelle le moteur (10) peut être introduit.

11. Appareil de lecture de codes à barres selon une des revendications 1 à 10, **caractérisé en ce que** la roue à miroir polygonal (6) est formée par une pièce moulée par injection en matière plastique.

12. Appareil de lecture de codes à barres selon une des revendications 1 à 11, **caractérisé en ce que** le moteur (10) est réalisé sous la forme d'un moteur à induit extérieur.
